# EUROPEAN PATENT APPLICATION

(11) **EP 4 811 601 A1**
(43) Date of publication of application: **23.09.2026**
(21) Application number: 26165293.7
(22) Date of filing: 17.03.2026
(51) Int. Cl.: H02J 7/64, H02J 7/60, H02J 7/80

(54) **OVERVOLTAGE PROTECTION CIRCUIT, VOLTAGE DETECTION CIRCUIT, COMPARATOR, CHARGE/DISCHARGE CONTROL CIRCUIT, AND SEMICONDUCTOR DEVICE**

(30) Priority: 18.03.2025 JP 2025043435; 18.03.2025 JP 2025043436; 15.07.2025 JP 2025118998; 24.09.2025 JP 2025158375; 04.11.2025 JP 2025185361
(71) Applicant: ABLIC Inc., Kitasaku-gun, Nagano 389-0293 (JP)
(72) Inventor: FUKUCHI, Shinya, Kitasaku-gun, Nagano 389-0293 (JP)
(74) Representative: Winter, Brandl - Partnerschaft mbB

(57) **Abstract**

The overvoltage protection circuit is configured to protect first and second input transistors (511, 521) from overvoltage, the overvoltage protection circuit (80, 80A, 80B, 80C, 80D, 80E, 80F), including: a first transistor (512) including one end connected to a drain of any one of the first input transistor (511) and the second input transistor (521); a second transistor (513) configured to supply a constant current to the one input transistor; a third transistor (514) connected in cascade to the second transistor; a fourth transistor (523) configured to supply a constant current to another input transistor; and a switch (53) configured to establish conduction between the gate of the first input transistor and a drain of the second input transistor when a voltage exceeding a threshold voltage of the second input transistor is applied to the gate of each of the first input transistor and the second input transistor.

## Description

### BACKGROUND

### 1. Field

The present invention relates to an overvoltage protection circuit, a voltage detection circuit, a comparator, a charge/discharge control circuit, and a semiconductor device.

### 2. Description of the Related Art

A battery device incorporating a secondary battery including a plurality of battery cells connected in series (hereinafter referred to as "multi-cell") is sometimes applied from the perspective of obtaining a higher voltage. In a voltage detection circuit for detecting a voltage between intermediate terminals in a circuit connected to the multi-cell secondary battery, in a case in which the intermediate terminal is short-circuited to a power supply terminal or a ground terminal, that is, in a case of short to a power supply or short to the ground, a higher voltage is applied to the intermediate terminal as compared to a case of a battery device incorporating a secondary battery including one battery cell (hereinafter referred to as "single cell"). There has been proposed a voltage detection circuit including a comparator for detecting short to the power supply or short to the ground of the intermediate terminal corresponding to a cell connection terminal as an abnormality during charging/discharging (see, for example, Japanese Patent Application Laid-open No. 2020-10536). In such a related-art circuit including a comparator, elements forming the circuit are normally protected against overvoltage in preparation for short to the power supply or short to the ground.

Further, a charge/discharge control circuit including a voltage detection circuit capable of performing overvoltage protection through use of an element having a relatively low withstand voltage has been proposed from the perspective of reducing the increase in the area of the voltage detection circuit connected to the multi-cell secondary battery due to the increase in the number of cells (see, for example, Japanese Patent Application Laid-open No. 2023-147174).

However, a semiconductor element adopted in the related-art circuit including a comparator as described above has a disadvantage in that the circuit area increases as the withstand voltage becomes higher because the element area becomes larger as the withstand voltage becomes higher. Further, it is required to increase a channel length (L length) in order to achieve low power consumption while ensuring the withstand voltage. Thus, the tendency for the circuit area to increase becomes significant.

Moreover, in the related-art charge/discharge control circuit as described in Japanese Patent Application Laid-open No. 2023-147174, for example, a threshold voltage corresponding to an abnormal state desired to be detected, such as an over-discharge state or an over-charge state, varies. In view of the above, a ladder circuit including a plurality of resistors connected in series to divide a voltage is individually provided from the perspective of generating a voltage corresponding to the abnormal state desired to be detected. Consequently, there is room for improvement from the perspective of reducing the area.

However, in a case in which the ladder circuit for over-discharge state detection and the ladder circuit for over-charge state detection are simply shared in the voltage detection circuit as described in Japanese Patent Application Laid-open No. 2023-147174, an over-charge detection voltage that is a voltage value for detecting the over-charge state is shifted, and the over-charge state cannot be properly detected. This phenomenon occurs because, when the voltage detection circuit for over-discharge detection that performs detection at a voltage lower than in the over-charge state operates, a gate voltage of an input transistor receiving the voltage of the cell connection terminal is clamped to a predetermined voltage, and thus the voltage is not correctly divided in the ladder circuit.

### SUMMARY

The present invention has an object to provide an overvoltage protection circuit, a voltage detection circuit, a comparator, a charge/discharge control circuit, and a semiconductor device which are capable of suppressing an increase in circuit area due to an improvement in withstand voltage.

An overvoltage protection circuit according to at least one aspect of the present invention is an overvoltage protection circuit to be connected to a protected circuit to protect the protected circuit from overvoltage, the protected circuit including: a first input transistor including a gate to which a first input voltage is to be applied and a source connected to a first power supply terminal; and a second input transistor including a gate to which a second input voltage proportional to the first input voltage is to be applied and a source connected to the first power supply terminal, the second input transistor being configured to transition from an OFF state to an ON state after the first input transistor in an OFF state transitions to an ON state in a process in which the first input voltage rises, the overvoltage protection circuit including: a first transistor including one end connected to a drain of any one input transistor out of the first input transistor and the second input transistor; a second transistor including a drain, a gate, and a source connected to the own gate of the second transistor, the second transistor being configured to supply a constant current to the first transistor and the one input transistor; a third transistor connected in cascade to the second transistor; a fourth transistor including a drain, a gate, and a source connected to the own gate of the fourth transistor, the fourth transistor being configured to supply a constant current to another input transistor out of the first input transistor and the second input transistor; and a switch configured to establish conduction between the gate of the first input transistor and a drain of the second input transistor when a voltage exceeding a threshold voltage of the second input transistor is applied to the gate of each of the first input transistor and the second input transistor.

A comparator according to at least one aspect of the present invention includes: a first comparison circuit including: a first input transistor including a gate connected to which a first input voltage is to be applied and a source connected to a first power supply terminal; a first transistor including one end connected to a drain of the first input transistor; a second transistor including a drain, a gate, and a source connected to the own gate of the second transistor, the second transistor being configured to supply a constant current to any one input transistor out of the first transistor and a second input transistor; and a third transistor connected in cascade to the second transistor, the first comparison circuit being configured to supply a first comparison result signal to another end of the first transistor, the first comparison result signal including a signal level corresponding to whether a voltage applied to the gate of the first input transistor is higher than a threshold voltage of the first input transistor; a second comparison circuit including: the second input transistor including a gate to which a second input voltage proportional to the first input voltage is to be applied and a source connected to the first power supply terminal, the second input transistor being configured to transition from an OFF state to an ON state after the first input transistor in an OFF state transitions from the OFF state to an ON state in a process in which the first input voltage rises; and a fourth transistor including a drain, a gate, and a source connected to the own gate of the fourth transistor, the fourth transistor being configured to supply a constant current to another input transistor out of the first transistor and the second input transistor, the second comparison circuit being configured to supply a second comparison result signal to the drain of the another input transistor, the second comparison result signal including a signal level corresponding to whether a voltage applied to the gate of the second input transistor is higher than a threshold voltage of the another input transistor; and a bypass transistor including a gate connected to the gate of the first input transistor, a source connected to the own gate of the bypass transistor, a drain connected to a drain of the second input transistor, and a back gate connected to the first power supply terminal, the bypass transistor being configured to establish conduction between the own drain and the own source of the bypass transistor when a voltage exceeding a threshold voltage of the second input transistor is applied to the gate of the second input transistor.

According to the at least aspect of the present invention, the increase in circuit area due to the improvement in withstand voltage can be suppressed.

### BRIEF DESCRIPTION OF THE DRAWINGS

FIG. 1 is a schematic diagram for illustrating one configuration example of a semiconductor device according to at least one embodiment of the present invention.
FIG. 2 is a circuit diagram for schematically illustrating one configuration example of a voltage detection circuit and a comparator according to the at least one embodiment in the semiconductor device according to the at least one embodiment.
FIG. 3 is a block diagram for illustrating one configuration example of the comparator according to the at least one embodiment.
FIG. 4 is a circuit diagram for schematically illustrating a first configuration example of an overvoltage protection circuit and a voltage detection circuit according to the at least one embodiment.
FIG. 5 is a circuit diagram for schematically illustrating one configuration example of a level shifter in the comparator according to the at least one embodiment.
FIG. 6 is a circuit diagram for schematically illustrating one configuration example of a voltage generation circuit for generating a control voltage to be supplied to a gate of an output transistor of a clamp circuit included in the overvoltage protection circuit according to the at least one embodiment.
FIG. 7 is a circuit diagram for schematically illustrating a second configuration example of the overvoltage protection circuit and the voltage detection circuit according to the at least one embodiment.
FIG. 8 is a circuit diagram for schematically illustrating a third configuration example of the overvoltage protection circuit and the voltage detection circuit according to the at least one embodiment.
FIG. 9 is a circuit diagram for schematically illustrating a configuration example on a low voltage detection circuit side in a fourth configuration example of the overvoltage protection circuit and the voltage detection circuit according to the at least one embodiment.
FIG. 10 is a circuit diagram for schematically illustrating a configuration example on a high voltage detection circuit side in the fourth configuration example of the overvoltage protection circuit and the voltage detection circuit according to the at least one embodiment.
FIG. 11 is a circuit diagram for schematically illustrating a configuration example on a low voltage detection circuit side in a fifth configuration example of the overvoltage protection circuit and the voltage detection circuit according to the at least one embodiment.
FIG. 12 is a circuit diagram for schematically illustrating a configuration example on a high voltage detection circuit side in the fifth configuration example of the overvoltage protection circuit and the voltage detection circuit according to the at least one embodiment.
FIG. 13 is a schematic diagram for illustrating one configuration example of a charge/discharge control circuit and a semiconductor device (charge control device and battery device) according to the at least one embodiment.
FIG. 14 is a circuit diagram for schematically illustrating a first modification example among modification examples of the overvoltage protection circuit and the voltage detection circuit according to the at least one embodiment.
FIG. 15 is a circuit diagram for schematically illustrating a second modification example among the modification examples of the overvoltage protection circuit and the voltage detection circuit according to the at least one embodiment.
FIG. 16 is a circuit diagram for schematically illustrating a modification example of the first configuration example of the overvoltage protection circuit and the voltage detection circuit according to the at least one embodiment.

### DESCRIPTION OF THE EMBODIMENTS

Now, an overvoltage protection circuit, a voltage detection circuit, a comparator, a charge/discharge control circuit, and a semiconductor device according to at least one embodiment of the present invention are described with reference to the drawings. In the description of the at least one embodiment, the charge/discharge control circuit is a circuit for controlling at least one of charging or discharging. That is, a charge control circuit for controlling charging and a discharge control circuit for controlling discharging are at least one aspect of the charge/discharge control circuit. Accordingly, the charge control circuit or the discharge control circuit is sometimes referred to as "charge/discharge control circuit" in the following description.

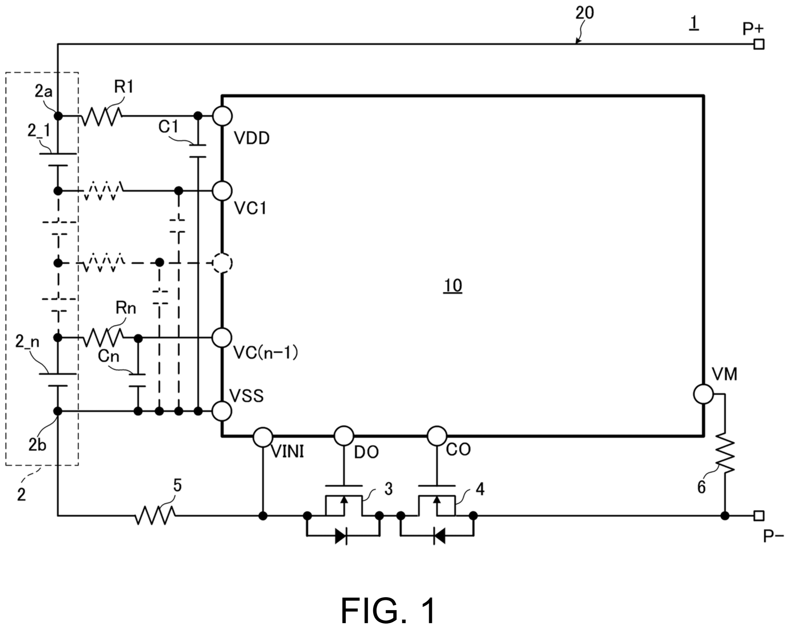

FIG. 1 is a block diagram for illustrating a circuit configuration of a battery device 1 which is one example of the semiconductor device according to the at least one embodiment.

The battery device 1 includes an IC chip including a semiconductor integrated circuit formed on a semiconductor substrate by a semiconductor process, specifically, a charge/discharge control device 20 for controlling charging and discharging of a secondary battery 2.

The battery device 1 and the charge/discharge control device 20 are each an example of the semiconductor device according to the at least one embodiment. The battery device 1 includes: the secondary battery 2 including an assembled battery having a so-called multi-cell configuration; an external positive electrode terminal P+ and an external negative electrode terminal P-; a discharge control field effect transistor (FET) 3; a charge control FET 4; and a charge/discharge control circuit 10 for controlling charging and discharging of the secondary battery 2.

The secondary battery 2 is a so-called multi-cell battery including an assembled battery including "n" battery cells (hereinafter simply referred to as "cells") 2_1 to 2_n connected in series, where "n" is the number of cells connected in series. In the case of the multi-cell battery, "n" is a natural number of two or more, that is, plural. The "n" cells 2_1 to 2_n are connected in series in the stated order from a positive electrode 2a of the secondary battery 2 toward a negative electrode 2b of the secondary battery 2.

The charge/discharge control device 20 includes the external positive electrode terminal P+ and the external negative electrode terminal P-, the discharge control FET 3, the charge control FET 4, and the charge/discharge control circuit 10. That is, the charge/discharge control device 20 serving as the semiconductor device is a device in which the secondary battery 2 is omitted from the battery device 1.

The external positive electrode terminal P+ and the external negative electrode terminal P- are, for example, terminals for connection to external equipment (not shown) such as a charger and a load. In the battery device 1, for example, the secondary battery 2, an overcurrent detection resistor 5, the discharge control FET 3, and the charge control FET 4 are connected in the stated order from the external positive electrode terminal P+ side, in a path (hereinafter referred to as "path between external terminals") for connecting the external positive electrode terminal P+ and the external negative electrode terminal P- to each other.

The battery device 1 and the charge/discharge control device 20 include the discharge control FET 3 and the charge control FET 4 on the external negative electrode terminal P- side, that is, on the low side. The discharge control FET 3 and the charge control FET 4 are both NMOS transistors, and their drains are connected to each other.

The discharge control FET 3 includes a gate connected to a discharge control signal output terminal DO, the drain serving as one end connected to the drain of the charge control FET 4, and a source serving as another end connected to one end of the overcurrent detection resistor 5.

The charge control FET 4 includes a gate connected to a charge control signal output terminal CO, a source serving as one end connected to the external negative electrode terminal P-, and the drain serving as another end connected to the drain of the discharge control FET 3.

The charge/discharge control circuit 10 includes a positive electrode power supply input terminal VDD, a negative electrode power supply input terminal VSS, cell connection terminals VC1 to VC(n-1), the charge control signal output terminal CO, the discharge control signal output terminal DO, an external negative voltage input terminal VM, and an overcurrent detection terminal VINI.

The positive electrode power supply input terminal VDD serving as a first power supply input terminal is connected to the positive electrode 2a via a resistor R1, and a voltage is supplied to the positive electrode power supply input terminal VDD from the positive electrode 2a of the secondary battery 2. The negative electrode power supply input terminal VSS serving as a second power supply input terminal is connected to the negative electrode 2b, and a voltage is supplied to the negative electrode power supply input terminal VSS from the negative electrode 2b.

The cell connection terminal VC1 is connected through a resistor R2 to a contact point between the first cell 2_1 and the second cell 2_2, that is, a negative electrode terminal of the first cell 2_1 and a positive electrode terminal of the second cell 2_2. In addition, in the same manner as in the cell connection terminal VC1, the cell connection terminals VC2, ..., VC(n-1) are connected through resistors R3, ..., Rn to a negative electrode terminal of the second cell 2_2 and a positive electrode terminal of the third cell 2_3, ..., a negative electrode terminal of the (n-1)th cell 2_(n-1) and a positive electrode terminal of the n-th cell 2_n, respectively.

Herein, ends of the respective resistors R1 to Rn connected to the first cell 2_1 to the n-th cell 2_n (left-side ends in FIG. 1) are each referred to as "first end," and ends thereof connected to the positive electrode power supply input terminal VDD, the cell connection terminals VC1 to VC(n-1), and the negative electrode power supply input terminal VSS, that is, ends thereof in an opposite direction to the first ends are each referred to as "second end" (right-side end in FIG. 1).

A capacitor C1 for voltage fluctuation suppression is connected between a contact point of the second end of the resistor R1 and the positive electrode power supply input terminal VDD and a contact point of the negative electrode 2b and the negative electrode power supply input terminal VSS. In addition, in the same manner as in the capacitor C1, capacitors C2, ..., Cn are connected between contact points of the second ends of the resistors R2, ..., Rn and the cell connection terminals VC1, ..., VC(n-1) and the contact point of the negative electrode 2b and the negative electrode power supply input terminal VSS, respectively.

The charge control signal output terminal CO is a terminal for providing a charge control signal generated in the charge/discharge control circuit 10 to control stop and permission of charging of the secondary battery 2, to the outside of the charge/discharge control circuit 10. The charge control signal output terminal CO is connected to the gate of the charge control FET 4.

The discharge control signal output terminal DO is a terminal for providing a discharge control signal generated in the charge/discharge control circuit 10 to control stop and permission of discharging of the secondary battery 2, to the outside of the charge/discharge control circuit 10. The discharge control signal output terminal DO is connected to the gate of the discharge control FET 3.

The external negative voltage input terminal VM is connected through a resistor 6 to the external negative electrode terminal P- and the source of the charge control FET 4.

The overcurrent detection terminal VINI is connected to the one end of the overcurrent detection resistor 5 and the source of the discharge control FET 3.

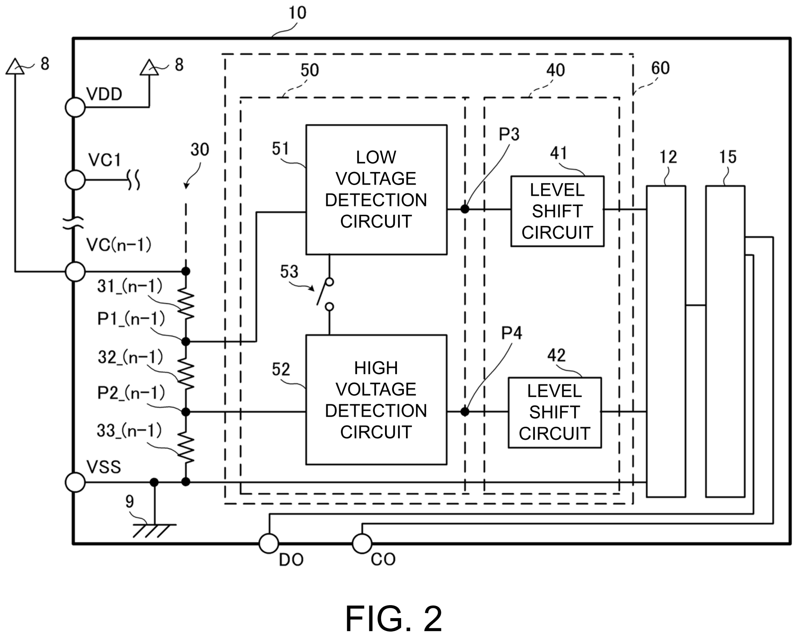

FIG. 2 is a circuit diagram for schematically illustrating a main configuration of the charge/discharge control circuit 10 which is one example of the charge/discharge control circuit according to the at least one embodiment. Configurations of circuits respectively connected to the first cell 2_1 to the n-th cell 2_n (see FIG. 1) are not substantially different from one another. Thus, a circuit connected to the n-th cell 2_n (see FIG. 1) is described as an example in FIG. 2.

The charge/discharge control circuit 10 includes a voltage detection circuit 50 which is one example of the voltage detection circuit according to the at least one embodiment, a level shifter 40, a voltage determination circuit 12, and a control circuit 15. The voltage detection circuit 50 is configured to detect a comparison between two different input voltages, serving as a first input voltage and a second input voltage, and two different threshold voltages such as an over-discharge detection voltage and an over-charge detection voltage. More specifically, the voltage detection circuit 50 includes a low voltage detection circuit 51 configured to detect whether the first input voltage is lower than the over-discharge detection voltage, serving as a lower threshold voltage, being set to be lower than the over-charge detection voltage, a high voltage detection circuit 52 configured to detect whether the second input voltage is higher than the over-charge detection voltage, serving as a higher threshold voltage, being set to be higher than the over-discharge detection voltage, and a switch 53 configured to close or open a path between the low voltage detection circuit 51 and the high voltage detection circuit 52.

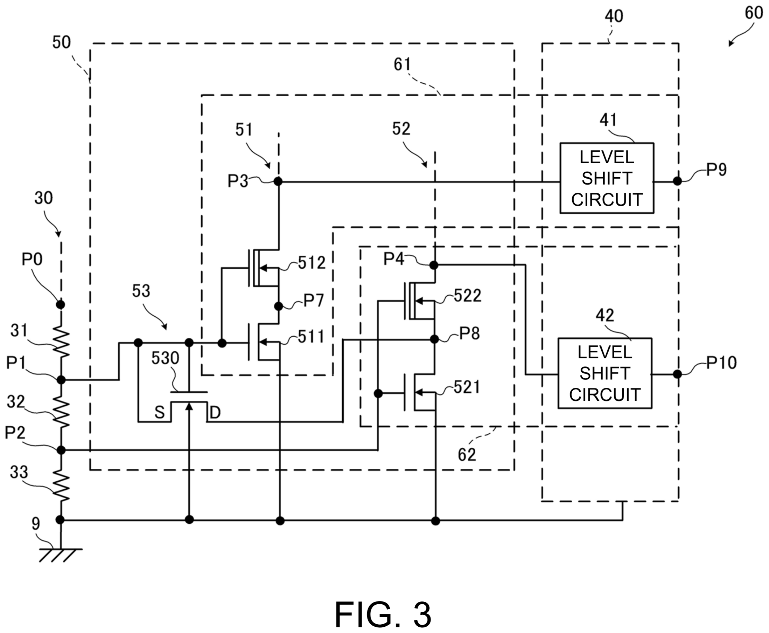

FIG. 3 is a block diagram for illustrating a circuit configuration of a comparator 60 which is one example of the comparator according to the at least one embodiment. Illustration of a part of the configuration of the voltage detection circuit 50 is omitted in FIG. 3.

The comparator 60 is configured to provide: a first comparison result signal including a signal level corresponding to whether or not a supplied first input voltage is higher than a first threshold voltage; and a second comparison result signal including a signal level corresponding to whether or not a supplied second input voltage is higher than a second threshold voltage.

The comparator 60 includes, for example, a first comparison circuit 61, a second comparison circuit 62, and an enhancement type NMOS transistor 530 serving as the switch 53. The first comparison circuit 61 includes a low voltage detection circuit 51 for receiving the signal including the signal level corresponding to whether or not the supplied first input voltage is higher than the first threshold voltage corresponding to the lower threshold voltage, and a level shift circuit 41 for level-shifting and providing the output voltage of the low voltage detection circuit 51. The second comparison circuit 62 includes a high voltage detection circuit 52 for receiving the signal including the signal level corresponding to whether or not the supplied second input voltage is higher than the second threshold voltage, being higher than the first threshold voltage, corresponding to the higher threshold voltage, and a level shift circuit 42 for level-shifting and providing the output voltage of the high voltage detection circuit 52.

A path 30 includes, for example, resistors 31, 32, and 33 connected in series, and one end of the resistor 33 and the path 30 is connected to a power supply terminal 9. Further, one end of the resistor 31 is connected to the cell connection terminal VC(n-1) (see FIG. 2) corresponding to an input terminal. Herein, regarding nodes formed by the resistors 31, 32, and 33 connected in series, a connection point of the cell connection terminal VC(n-1) (see FIG. 2) and the resistor 31 is referred to as "node P0," a connection point of the resistor 31 and the resistor 32 is referred to as "node P1," and a connection point of the resistor 32 and the resistor 33 is referred to as "node P2."

The resistors 31, 32, and 33 connected in series cause a voltage drop. The voltage is higher as coming closer to another-end side of the path 30, and is lower as coming closer to the one-end side of the path 30, that is, to the power supply terminal 9 side. Accordingly, among the nodes P0, P1, and P2, the node P0 has the highest voltage, followed by the node P1, and then the node P2 (having the lowest voltage).

The low voltage detection circuit 51, the high voltage detection circuit 52, and the NMOS transistor 530 serving as a bypass transistor form the voltage detection circuit 50. In the comparator 60, the node P1 corresponds to each of a first input terminal of the comparator 60, an input end of the first comparison circuit 61, a first input end of the voltage detection circuit 50, and an input end of the low voltage detection circuit 51. The node P2 corresponds to each of a second input terminal of the comparator 60, an input end of the second comparison circuit 62, a second input end of the voltage detection circuit 50, and an input end of the high voltage detection circuit 52. A node P3 corresponds to each of a first output end of the voltage detection circuit 50 and an output end of the low voltage detection circuit 51. A node P4 corresponds to each of a second output end of the voltage detection circuit 50 and an output end of the high voltage detection circuit 52.

The low voltage detection circuit 51 includes an enhancement type NMOS transistor 511 serving as a first input transistor, and a depletion type NMOS transistor 512 serving as a first transistor. The high voltage detection circuit 52 includes an enhancement type NMOS transistor 521 serving as a second input transistor, and a depletion type NMOS transistor 522 serving as a second transistor.

Here, a drain of the NMOS transistor 512 and a drain of the NMOS transistor 522 are the node P3 and the node P4, respectively. The node P3 and the node P4 correspond to the output end of the low voltage detection circuit 51 and the output end of the high voltage detection circuit 52, respectively. Further, a connection point of the NMOS transistor 511 and the NMOS transistor 512 is referred to as "node P7," and a connection point of the NMOS transistor 521 and the NMOS transistor 522 is referred to as "node P8."

The NMOS transistor 530 includes a gate connected to a gate of the NMOS transistor 511 and a gate of the NMOS transistor 512, a source S connected to the gate of the NMOS transistor 511 and its own gate, a drain D connected to a drain of the NMOS transistor 521 and a source of the NMOS transistor 522, and a back gate connected to a source of the NMOS transistor 511 and the power supply terminal 9. A connection point of the drain D of the NMOS transistor 530, the drain of the NMOS transistor 521, and the source serving as one end of the NMOS transistor 522 forms the node P8.

The level shift circuit 41 and the level shift circuit 42 form the level shifter 40. In the level shifter 40, the node P3 corresponds to a first input end of the level shifter 40 and an input end of the level shift circuit 41. The node P4 corresponds to a second input end of the level shifter 40 and an input end of the level shift circuit 42. A node P9 corresponds to each of a first output end of the level shifter 40, an output end of the level shift circuit 41, an output end of the first comparison circuit 61, and a first output terminal of the comparator 60. A node P10 corresponds to each of a second output end of the level shifter 40, an output end of the level shift circuit 42, an output end of the second comparison circuit 62, and a second output terminal of the comparator 60.

Next, the overvoltage protection circuit according to the at least one embodiment is described with several configuration examples, taking the voltage detection circuit including the overvoltage protection circuit according to the at least one embodiment as an example. A voltage Vdd of a power supply terminal 8 (not shown in FIG. 3) is assumed to be high enough to damage the NMOS transistor 511 and the NMOS transistor 521 in a state without any overvoltage protection, through application to the node P0 through the cell connection terminal VC(n-1).

### (First Configuration Example)

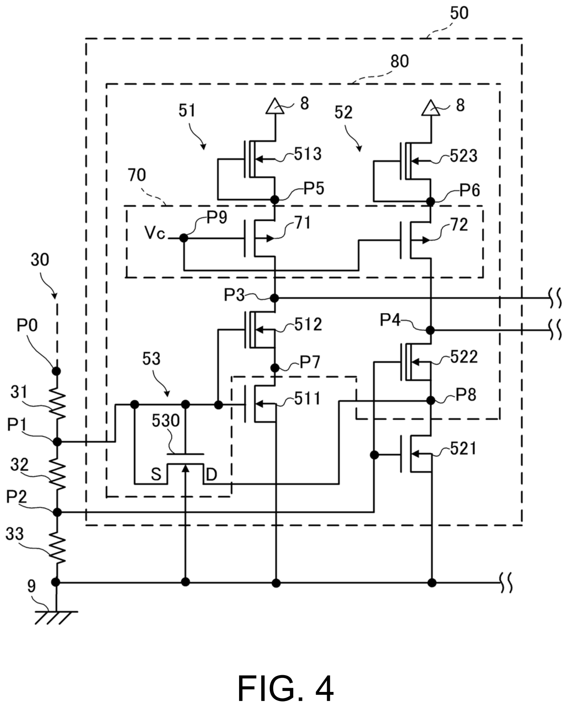

FIG. 4 is a circuit diagram for schematically illustrating a configuration example of the voltage detection circuit 50 including an overvoltage protection circuit 80 serving as the overvoltage protection circuit according to the at least one embodiment.

The voltage detection circuit 50 includes, for example, the NMOS transistor 511, the NMOS transistor 512, a depletion type NMOS transistor 513, an enhancement type PMOS transistor 71, the NMOS transistor 521, the depletion type NMOS transistor 522, a depletion type NMOS transistor 523, an enhancement type PMOS transistor 72, and the NMOS transistor 530.

The NMOS transistor 511, the NMOS transistor 512, the NMOS transistor 513, and the PMOS transistor 71 form the low voltage detection circuit 51. The NMOS transistor 521, the NMOS transistor 522, the NMOS transistor 523, and the PMOS transistor 72 form the high voltage detection circuit 52. The low voltage detection circuit 51 and the high voltage detection circuit 52 are connected in parallel between the power supply terminal 8 and the power supply terminal 9. The low voltage detection circuit 51 and the high voltage detection circuit 52 are connected to the node P1 and the node P2 in the path 30, respectively.

In the voltage detection circuit 50, the NMOS transistor 512, the NMOS transistor 513, the PMOS transistor 71, the NMOS transistor 530, the NMOS transistor 522, the NMOS transistor 523, and the PMOS transistor 72 form the overvoltage protection circuit 80. The NMOS transistor 512, the NMOS transistor 513, the PMOS transistor 71, and the NMOS transistor 530 protect the low voltage detection circuit 51 (more specifically, the NMOS transistor 511) from overvoltage, and the NMOS transistor 522, the NMOS transistor 523, the PMOS transistor 72, and the NMOS transistor 530 protect the high voltage detection circuit 52 (more specifically, the NMOS transistor 521) from overvoltage.

The NMOS transistor 511 serving as the first input transistor has a withstand voltage equal to or higher than a voltage applied to the gate in a normal state in which no short to the power supply or short to the ground occurs, but the withstand voltage may be less than a maximum voltage to be possibly applied at the time of occurrence of an abnormality. That is, the NMOS transistor 511 is an FET having a lower withstand voltage as compared to an FET having a withstand voltage capable of withstanding the maximum voltage to be possibly applied to the gate at the time of occurrence of an abnormality. Accordingly, the area of the NMOS transistor 511 is smaller than that of an FET having a withstand voltage capable of withstanding the maximum voltage to be possibly applied at the time of occurrence of an abnormality.

The NMOS transistor 512 which is one example of an FET is a so-called cascode transistor and is connected from the perspective of ensuring a drain-source voltage VDS of the NMOS transistor 511 to some extent. The NMOS transistor 512 serving as a first transistor includes a source serving as one end connected to a drain of the NMOS transistor 511. The connection point of the source of the NMOS transistor 512 and the drain of the NMOS transistor 511 forms the node P7. Further, the NMOS transistor 512 includes the gate connected to the gate of the NMOS transistor 511 and the drain serving as another end connected to the output end of the low voltage detection circuit 51. That is, the drain of the NMOS transistor 512 is connected to the level shifter 40 (not shown in FIG. 4) which is a downstream circuit with respect to the low voltage detection circuit 51.

The NMOS transistor 513 serving as a second transistor includes a drain connected to the power supply terminal 8, a gate, and a source connected to its own gate, and operates as a constant current source. The connection point of the NMOS transistor 513 and a clamp circuit 70 (more specifically, a source of the PMOS transistor 71) forms a node P5. An FET having a low withstand voltage relative to a case in which the NMOS transistor 513 is not connected to the clamp circuit 70 is applicable to the NMOS transistor 513. Accordingly, the area of the NMOS transistor 513 operating as a constant current source connected to the clamp circuit 70 is smaller than that of a constant current source in the case in which the NMOS transistor 513 is not connected to the clamp circuit 70.

The clamp circuit 70 includes, for example, the PMOS transistor 71 and the PMOS transistor 72 which are examples of the FET. A control voltage Vc which is a voltage of a node P9 is supplied to each of a gate of the PMOS transistor 71 serving as a third transistor and a gate of the PMOS transistor 72 serving as a sixth transistor.

The high voltage detection circuit 52 is formed in the same manner as in the low voltage detection circuit 51. That is, the description of the low voltage detection circuit 51 can be replaced with the description of the high voltage detection circuit 52 by substituting the NMOS transistor 511 with the NMOS transistor 521 serving as the second input transistor, the NMOS transistor 512 with the NMOS transistor 522 serving as a fifth transistor, the NMOS transistor 513 with the NMOS transistor 523 serving as a fourth transistor, the node P3 with the node P4, the node P5 with a node P6, and the node P7 with the node P8.

The threshold voltage of the NMOS transistor 530 is set so that the NMOS transistor 530 is turned on under a state in which a voltage applied to the node P1, that is, the gate exceeds the threshold voltage of the NMOS transistor 521. The threshold voltage of the NMOS transistor 530 is set so that the NMOS transistor 530 is turned on at a voltage lower than the withstand voltage of the gates of the NMOS transistor 511 and the NMOS transistor 521. In short, the NMOS transistor 530 is an FET having a relatively low withstand voltage that may be less than the maximum voltage to be possibly applied at the time of occurrence of an abnormality, similarly to the NMOS transistor 511 and the NMOS transistor 521.

Here, in order to describe the element sizes of the NMOS transistor 512, the NMOS transistor 522, the PMOS transistor 71, and the PMOS transistor 72, a comparison is made with a case in which a voltage detection circuit corresponding to the low voltage detection circuit or the high voltage detection circuit (hereinafter simply referred to as "comparison target") is formed by a circuit including: a depletion type FET functioning as a constant current source including a drain connected to the power supply terminal 8, a gate, and a source connected to its own gate; and an enhancement type FET including a drain connected to the source of the depletion type FET, a gate for receiving an input voltage, and a source connected to the power supply terminal 9.

The NMOS transistor 512, the NMOS transistor 522, the PMOS transistor 71, and the PMOS transistor 72 require the same degree of withstand voltage as those of the depletion type FET and the enhancement type FET of the comparison target. However, the channel length (L length) can be shortened (reduced by about one digit to two digits) due to the difference in function. Accordingly, the low voltage detection circuit 51 and the high voltage detection circuit 52 are formed to have a smaller total area as compared to the comparison target, although the total number of elements increases.

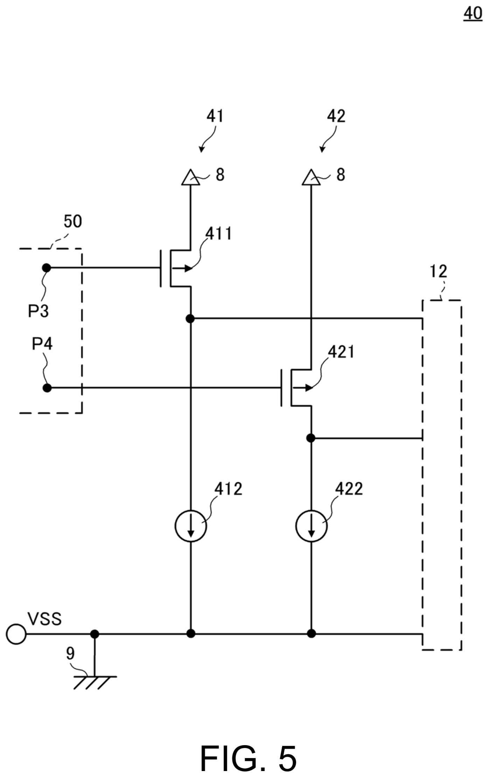

FIG. 5 is a circuit diagram for schematically illustrating one configuration example of the level shifter 40. The level shifter 40 includes the level shift circuit 41 for receiving the voltage of the node P3 and the level shift circuit 42 for receiving the voltage of the node P4.

The level shift circuit 41 includes, for example, a PMOS transistor 411 and a constant current source 412. The PMOS transistor 411 includes a source connected to the power supply terminal 8, a gate connected to the node P3, and a drain. The constant current source 412 includes a first end connected to the drain of the PMOS transistor 411 and a second end connected to the power supply terminal 9. The second end of the constant current source 412, and a connection point of the drain of the PMOS transistor 411 and the first end of the constant current source 412 are the node P9.

The level shift circuit 42 includes, for example, a PMOS transistor 421 and a constant current source 422. The PMOS transistor 421 includes a source connected to the power supply terminal 8, a gate connected to the node P4, and a drain. The constant current source 422 includes a first end connected to the drain of the PMOS transistor 421 and a second end connected to the power supply terminal 9. The second end of the constant current source 422, and a connection point of the drain of the PMOS transistor 421 and the first end of the constant current source 422 are the node P10.

Next, the operation of the overvoltage protection circuit 80 and the comparator 60 is described with reference to FIG. 4 and FIG. 5, focusing on the operation of the voltage detection circuit 50, by taking an example of a case in which the highest voltage is applied to the voltage detection circuit 50, specifically, a case in which the node P0 is short to the power supply (short-circuited to the power supply terminal 8). In the at least one embodiment, a case in which the threshold voltage of the NMOS transistor 530 is set so that the NMOS transistor 530 is turned on at substantially the same timing as the timing at which the NMOS transistor 521 is turned on due to the increase in the voltage of the nodes P1 and P2 is described as an example.

First, the operation in the normal state in which a voltage within an allowable range is applied to the node P0 and thus the NMOS transistor 530 is off is described.

In the voltage detection circuit 50, the NMOS transistor 511 is turned on when the voltage of the node P1 supplied to the gate is higher than the threshold voltage of the NMOS transistor 511, and, otherwise, the NMOS transistor 511 is turned off. Further, the NMOS transistor 521 is turned on when the voltage of the node P2 supplied to the gate is higher than the threshold voltage of the NMOS transistor 521, and otherwise, the NMOS transistor 521 is turned off. In the voltage detection circuit 50, the threshold voltages of the NMOS transistor 511 and the NMOS transistor 521 are set so that the NMOS transistor 511 transitions from the OFF state to the ON state first, and then the NMOS transistor 521 transitions from the OFF state to the ON state, in a process in which the voltage of the node P0 rises.

Now, description is given of conditions of a threshold voltage Vth511 of the NMOS transistor 511 and a threshold voltage Vth521 of the NMOS transistor 521 required to cause the NMOS transistor 511 to transition from the OFF state to the ON state first, and then cause the NMOS transistor 521 to transition from the OFF state to the ON state, in the process in which the voltage of the node P0 rises.

The voltage of the node P2 is lower than the voltage of the node P1 and is proportional to the voltage of the node P1, from the configuration of the path 30. Accordingly, the voltage of the node P2 can be represented through use of a proportional constant "k" (0<k<1) and the voltage of the node P1. Here, in a case in which the voltage of the node P2 is "k" times the voltage of the node P1, the magnitude relationship between the threshold voltage Vth511 of the NMOS transistor 511 and the threshold voltage Vth521 of the NMOS transistor 521 can be represented by Expression (1) below, based on the magnitude relationship among the voltage of the node P1, the voltage of the node P2, the threshold voltage Vth511 of the NMOS transistor 511, and the threshold voltage Vth521 of the NMOS transistor 521 at the time at which the NMOS transistors 511 and 521 transition from the OFF state to the ON state. $Vth 521 > k ⋅ Vth 511$

As described above, in the voltage detection circuit 50, the voltage of the node P0 can be detected in a manner classified into: a low voltage band in which both of the NMOS transistor 511 and the NMOS transistor 521 are OFF; an intermediate voltage band in which the NMOS transistor 511 is ON and the NMOS transistor 521 is OFF; and a high voltage band in which both of the NMOS transistor 511 and the NMOS transistor 521 are ON.

When the low voltage detection circuit 51 detects the voltage of the node P0 based on the voltage of the node P1, a voltage with a signal level corresponding to the detection result appears at the node P3. In a case in which the NMOS transistor 511 is OFF, a voltage of a high level (hereinafter referred to as "H level") appears at the node P3. In contrast, in a case in which the NMOS transistor 511 is ON, a voltage of a low level (hereinafter referred to as "L level") appears at the node P3.

The low voltage detection circuit 51 provides the voltage of the node P3 serving as a first comparison result signal to the level shifter 40 (more specifically, the gate of the PMOS transistor 411). A voltage level-shifted from the voltage of the node P3 is provided from the node P9 which is the drain of the PMOS transistor 411.

When the high voltage detection circuit 52 detects the voltage of the node P0 based on the voltage of the node P2, a voltage with a signal level corresponding to the detection result appears at the node P4. In a case in which the NMOS transistor 521 is OFF, the voltage of the H level appears at the node P4. In contrast, when the NMOS transistor 521 is ON, the voltage of the L level appears at the node P4.

The high voltage detection circuit 52 provides the voltage of the node P4 serving as a second comparison result signal to the level shifter 40 (more specifically, the gate of the PMOS transistor 421). A voltage level-shifted from the voltage of the node P4 is provided from the node P10 which is the drain of the PMOS transistor 421.

In the voltage detection circuit 50, the clamp circuit 70 (more specifically, the PMOS transistors 71 and 72) provides overvoltage protection for the NMOS transistors 513 and 523. More specifically, in the low voltage detection circuit 51, the voltage of the source of the PMOS transistor 71 which is a first output transistor of the clamp circuit 70, that is, the node P5 is clamped to a vicinity of a voltage (Vc+|Vthp|). In the high voltage detection circuit 52, the voltage of the source of the PMOS transistor 72 which is a second output transistor of the clamp circuit 70, that is, the node P6 is clamped to a vicinity of the voltage (Vc+|Vthp|). Here, the voltage |Vthp| is the threshold voltage of each of the PMOS transistor 71 and the PMOS transistor 72. The NMOS transistors 513 and 523 are protected from overvoltage by such a clamping operation by the PMOS transistors 71 and 72.

Next, an overvoltage state in which the voltage of the node P0 is higher than that in the normal state is described, taking an example of a case in which the node P0 is short to the power supply. When the voltage of the node P0 further increases due to a cause such as the short to the power supply of the node P0 even after the NMOS transistor 521 is turned on, the voltage of the node P1 also increases, and the NMOS transistor 530 transitions from the OFF state to the ON state (this state is referred to as "overvoltage state" or "abnormal state" relative to the normal state). When the NMOS transistor 530 transitions to the ON state, the node P1 is connected to the node P8.

Because the NMOS transistor 521 and the NMOS transistor 522 are already turned on at the timing at which the NMOS transistor 530 is turned on, a path, that is, a bypass is formed from the node P1 to the power supply terminal 9 through the node P8, the drain of the NMOS transistor 521, and the source of the NMOS transistor 521. Because a bypass current flows to the resistor 31 from the drain to the source of the NMOS transistor 521 due to the formed bypass, the voltage of the node P1 is suppressed to a vicinity of a reference voltage Vref which is a desired voltage that is less than the gate withstand voltage of the NMOS transistor 521. Further, the voltage of the node P2 is also suppressed to the reference voltage Vref or less because the voltage of the node P1 is suppressed to the vicinity of the reference voltage Vref.

With such operation of the voltage detection circuit 50, even in a case in which the node P0 is short to the power supply, the increase in the voltage applied to the gate of the NMOS transistor 511 is suppressed to the vicinity of the reference voltage Vref. Thus, the circuits including the NMOS transistor 511 and the NMOS transistor 521 can be protected from overvoltage.

With the overvoltage protection circuit 80 and the comparator 60 including the overvoltage protection circuit 80, the voltage supplied to the gates of the NMOS transistor 511 and the NMOS transistor 521 can be suppressed to be lower than in the case of the related art. The withstand voltage of the NMOS transistors 511 and 521 can be suppressed to be lower than in the case of the related art because the voltage supplied to the NMOS transistor 511 and the NMOS transistor 521 can be suppressed to be lower than in the case of the related art.

Further, the withstand voltage of the NMOS transistor 530 can be suppressed to be approximately the same as that of the NMOS transistor 511 and the NMOS transistor 521 (relatively low withstand voltage). Moreover, a channel length (L length) sufficiently shorter than that of the NMOS transistor 511 and the NMOS transistor 521 (reduced by about one digit to two digits) is applicable to the NMOS transistor 530 due to the difference in function from the NMOS transistor 511 and the NMOS transistor 521.

Further, the NMOS transistor 512, the NMOS transistor 522, the PMOS transistor 71, and the PMOS transistor 72 can have element sizes with a channel length (L length) that is more shortened (reduced by about one digit to two digits) while maintaining the same degree of withstand voltage, as compared to the depletion type FET and the enhancement type FET of the comparison target described above.

With the overvoltage protection circuit 80 and the comparator 60 including the overvoltage protection circuit 80, a path for bypassing a current based on an excessive voltage supplied to the low voltage detection circuit 51 and the high voltage detection circuit 52 is shared by the low voltage detection circuit 51 and the high voltage detection circuit 52. With this configuration, the area can be reduced as compared to a case in which the low voltage detection circuit 51 and the high voltage detection circuit 52 individually include the NMOS transistor 530.

With the overvoltage protection circuit 80 and the comparator 60 including the overvoltage protection circuit 80, the voltage supplied to the NMOS transistors 511 and 521 can be suppressed to be lower than in the case of the related art. Thus, positive bias temperature instability (PBTI) can be suppressed more as compared to the related art. Further, because the PBTI can be suppressed more as compared to the related art, the threshold voltage shift of the N-type transistor can be suppressed, and the detection voltage shift after a long-term reliability test can be suppressed more as compared to the related art.

Further, the overvoltage protection circuit 80 includes the NMOS transistor 512 connected in cascade to the NMOS transistor 511 and the NMOS transistor 522 connected in cascade to the NMOS transistor 521. Thus, the drain-source voltage VDS of the NMOS transistor 511 and the drain-source voltage VDS of the NMOS transistor 521 can be kept constant. That is, the drain-source voltage VDS of each of the NMOS transistor 511 and the NMOS transistor 521 can be made a voltage without dependence on the voltage Vdd.

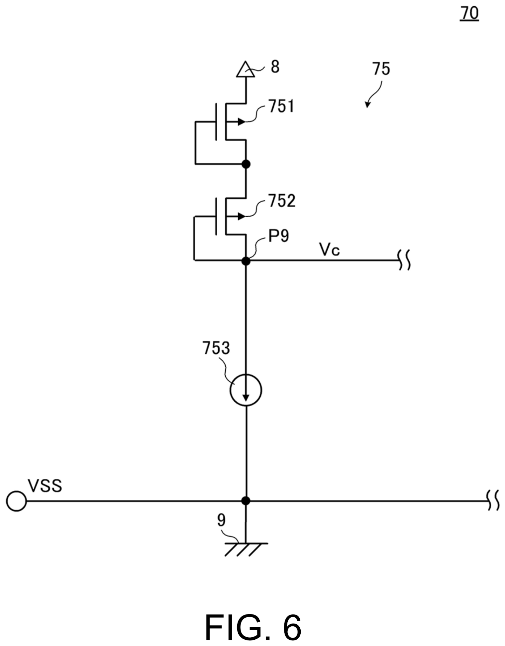

The above-mentioned clamp circuit 70 may include a voltage generation circuit for generating the control voltage Vc to be supplied to the gates of the PMOS transistors 71 and 72. For example, the voltage generation circuit can be formed as illustrated in FIG. 6 referred to later.

FIG. 6 is a circuit diagram for schematically illustrating a configuration example of a voltage generation circuit 75 for generating the control voltage Vc to be supplied to the gates of the PMOS transistors 71 and 72 in the clamp circuit 70.

The voltage generation circuit 75 includes a PMOS transistor 751, a PMOS transistor 752 connected in cascade to the PMOS transistor 751, and a constant current source 753. The voltage generation circuit 75 is formed to have a connection point of the PMOS transistor 752 and the constant current source 753 as an output end. The voltage generation circuit 75 generates the control voltage Vc at the output end of the voltage generation circuit 75, that is, at the node P9.

The PMOS transistor 751 includes a source connected to the power supply terminal 8, a gate, and a drain connected to its own gate. The PMOS transistor 752 includes a source connected to the drain of the PMOS transistor 751, a gate, and a drain connected to its own gate. The constant current source 753 includes a first end connected to the gate and the drain of the PMOS transistor 752, and a second end connected to the power supply terminal 9.

The control voltage Vc is set in consideration of the voltage Vdd of the power supply terminal 8, the source-drain voltages of the NMOS transistors 513 and 523 at the time of conduction, and the withstand voltages of the NMOS transistors 513 and 523. For example, assuming that the PMOS transistors 751 and 752 are FETs having the same threshold voltage |Vthp| as that of the PMOS transistors 71 and 72 (see FIG. 4), the control voltage Vc is a voltage (Vdd-2·|Vthp|). Consequently, the voltage of the node P5 and the node P6 is clamped to a vicinity of a voltage (Vdd-|Vthp|).

### (Second Configuration Example)

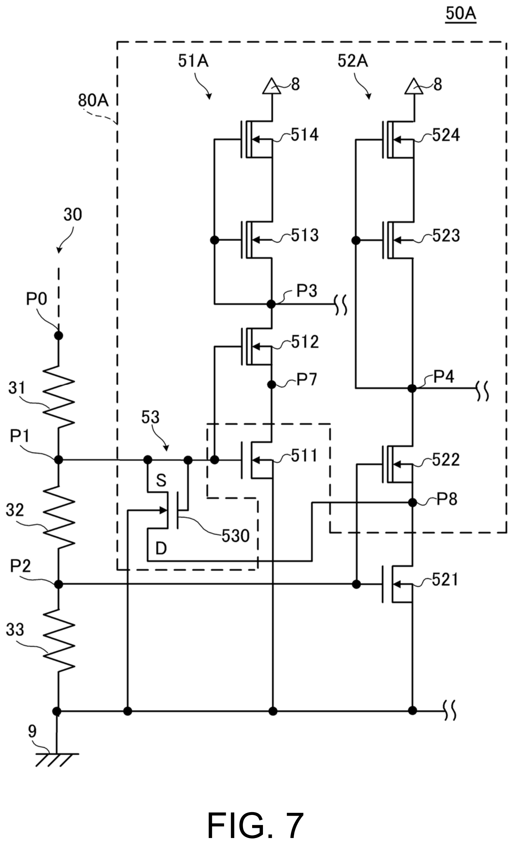

FIG. 7 is a circuit diagram for schematically illustrating a configuration example of a voltage detection circuit 50A including an overvoltage protection circuit 80A serving as the overvoltage protection circuit according to the at least one embodiment.

The overvoltage protection circuit according to the second configuration example differs from the overvoltage protection circuit according to the first configuration example in that the circuit configuration is different, but the other points are not substantially different. Accordingly, in the description of the second configuration example, the description focuses on the overvoltage protection circuit 80A differing from the overvoltage protection circuit 80, and redundant description of other components that are not substantially different is omitted by assigning the same reference symbols.

The overvoltage protection circuit 80A differs from the overvoltage protection circuit 80 in that the overvoltage protection circuit 80A includes depletion type NMOS transistors 514 and 524 instead of the PMOS transistors 71 and 72, but there is no substantial difference in other points.

The overvoltage protection circuit 80A includes the depletion type NMOS transistors 512, 513, and 514, the depletion type NMOS transistors 522, 523, and 524, and the NMOS transistor 530. Here, the NMOS transistor 511 and the depletion type NMOS transistors 512, 513, and 514 form a low voltage detection circuit 51A. The NMOS transistor 521 and the depletion type NMOS transistors 522, 523, and 524 form a high voltage detection circuit 52A.

In the overvoltage protection circuit 80A, the NMOS transistor 514 for protecting the NMOS transistor 513 from overvoltage is connected between the drain of the NMOS transistor 513 and the power supply terminal 8. Further, the NMOS transistor 524 for protecting the NMOS transistor 523 from overvoltage is connected between the drain of the NMOS transistor 523 and the power supply terminal 8. That is, the NMOS transistor 514 serving as a third transistor is connected in cascade to the NMOS transistor 513 (more specifically, the gate and the source of the NMOS transistor 513). The NMOS transistor 524 serving as a sixth transistor is connected in cascade to the NMOS transistor 523 (more specifically, the gate and the source of the NMOS transistor 523). The element sizes of the NMOS transistors 514 and 524 are approximately the same as those of the above-mentioned PMOS transistors 71 and 72.

Further, the NMOS transistor 513 has its own gate and source connected to each other, and is also connected to the gate of the NMOS transistor 514, the drain of the NMOS transistor 512, and the gate of the PMOS transistor 411 (see FIG. 5). Similarly to the NMOS transistor 513, the NMOS transistor 523 has its own gate and source connected to each other, and is also connected to a gate of the NMOS transistor 524, the drain serving as another end of the NMOS transistor 522, and the gate of the PMOS transistor 421 (see FIG. 5). Here, the gate and the source of the NMOS transistor 513 correspond to the node P3, that is, the output end of the low voltage detection circuit 51A. The gate and the source of the NMOS transistor 523 correspond to the node P4, that is, the output end of the high voltage detection circuit 52A.

Next, the operation of the voltage detection circuit 50A is described, taking an example of a case in which the highest voltage is applied to the voltage detection circuit 50A, specifically, a case in which the node P0 is short to the power supply.

The voltage detection circuit 50A differs from the voltage detection circuit 50 for protecting the NMOS transistors 513 and 523 from overvoltage by using the clamp circuit 70 in that the NMOS transistors 513 and 523 are protected from overvoltage by using the NMOS transistors 514 and 524, respectively. However, the overall circuit operation including the protection operation of the NMOS transistors 511 and 521 is not substantially different. The description of the circuit operation of the voltage detection circuit 50A is omitted with reference to the description of the circuit operation of the voltage detection circuit 50.

The overvoltage protection circuit and the comparator according to the second configuration example can yield the same effects as those of the overvoltage protection circuit and the comparator according to the first configuration example. The overvoltage protection circuit 80A has a higher degree of freedom in design as compared to the overvoltage protection circuit 80 that receives the supply of the control voltage Vc in that each of the NMOS transistors 513 and 523 can be protected from overvoltage even without the supply of the control voltage Vc.

Further, the total circuit area can be suppressed to be even smaller than in the case in which the overvoltage protection circuit 80 requiring an internal or external voltage generation circuit for the control voltage Vc is included, because the overvoltage protection circuit 80A does not require a supply source (voltage generation circuit) for the control voltage Vc to enable the protection operation of the clamp circuit 70.

### (Third Configuration Example)

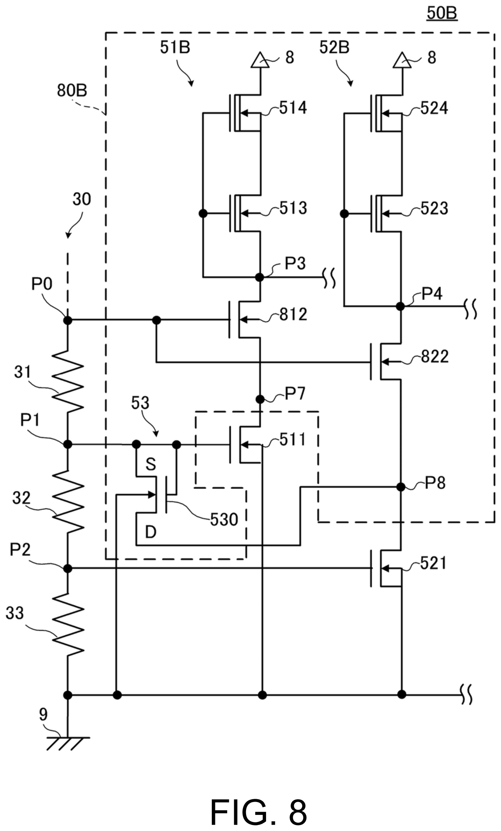

FIG. 8 is a circuit diagram for schematically illustrating a configuration example of a voltage detection circuit 50B including an overvoltage protection circuit 80B serving as the overvoltage protection circuit according to the at least one embodiment.

The overvoltage protection circuit 80B differs from the overvoltage protection circuit 80A in including enhancement type NMOS transistors 812 and 822 instead of the respective depletion type NMOS transistors 512 and 522, but there is no substantial difference in other points. The NMOS transistor 812 and the NMOS transistor 822 each have a positive threshold voltage, and thus differ from the depletion type NMOS transistors 512 and 522 in that their gates are connected to a node having a voltage higher than that of the node P1, such as the node P0, instead of the node P1 and the node P2. However, the NMOS transistor 812 and the NMOS transistor 822 provide the operation and functions that are not substantially different from those of the depletion type NMOS transistors 512 and 522.

The overvoltage protection circuit 80B formed in this manner operates in the same manner as in the overvoltage protection circuit 80A and can yield the same effects. Accordingly, the overvoltage protection circuit 80B may be applied instead of the overvoltage protection circuit 80A in the overvoltage protection circuit and the comparator according to the at least one embodiment. In short, the voltage detection circuit 50B and the comparator 60 in which the overvoltage protection circuit 80A is replaced with the overvoltage protection circuit 80B operate in the same manner as in the voltage detection circuit 50A and the comparator 60 that include the overvoltage protection circuit 80A, and can yield the same effects.

### (Fourth Configuration Example)

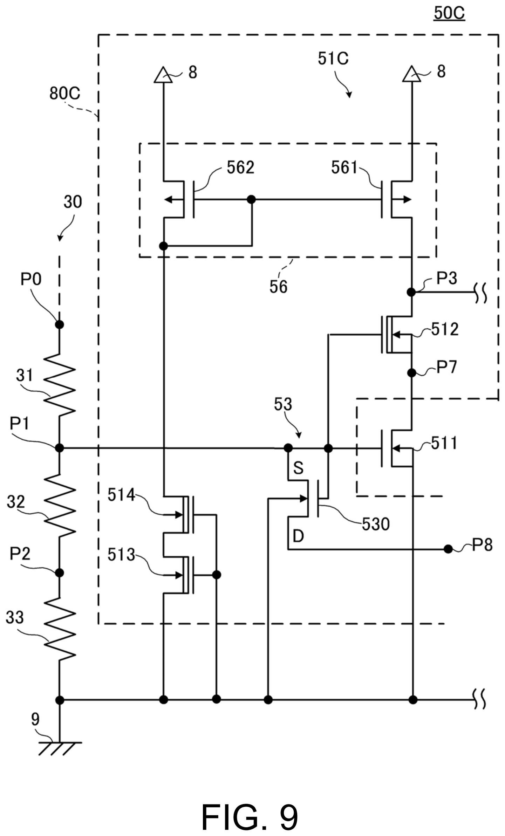

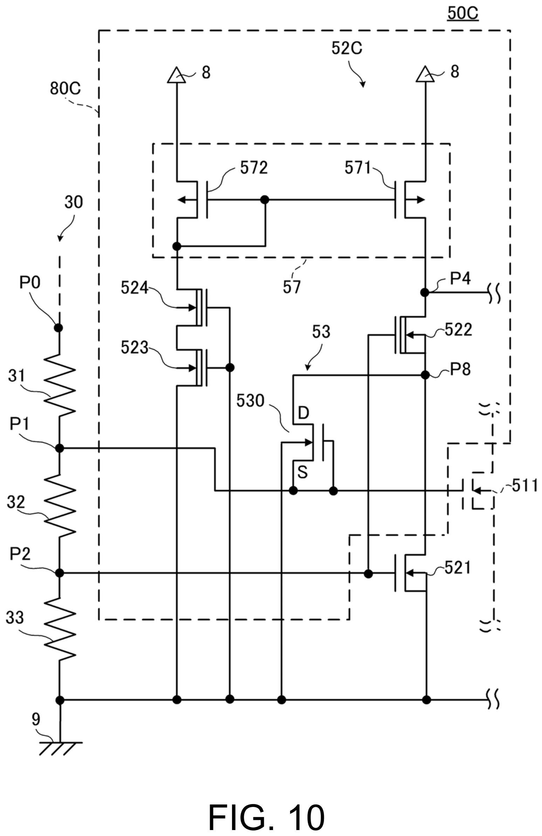

FIG. 9 and FIG. 10 are circuit diagrams for schematically illustrating a configuration example of a voltage detection circuit 50C including an overvoltage protection circuit 80C serving as the overvoltage protection circuit according to the at least one embodiment.

The overvoltage protection circuit 80C differs from the overvoltage protection circuit 80A in further including a current mirror circuit 56 and a current mirror circuit 57, and in the arrangement of the NMOS transistors 514 and 524 and the NMOS transistors 513 and 523, but there is no substantial difference in other points. Accordingly, in the description of the overvoltage protection circuit 80C, redundant description of the components that are not substantially different from the overvoltage protection circuit 80A, such as the NMOS transistors 511 and 521, is omitted by assigning the same reference symbols.

The overvoltage protection circuit 80C includes the NMOS transistors 512 and 522, the NMOS transistors 513 and 523, the NMOS transistors 514 and 524, the NMOS transistor 530, and the current mirror circuits 56 and 57. Here, the current mirror circuit 56 includes two PMOS transistors 561 and 562. The current mirror circuit 57 includes two PMOS transistors 571 and 572, and is formed in the same manner as in the current mirror circuit 56.

In the current mirror circuit 56, the PMOS transistor 561 includes a source connected to the power supply terminal 8, a gate connected to a gate of the PMOS transistor 562, and a drain. Further, the PMOS transistor 562 includes a source connected to the power supply terminal 8, the gate connected to the gate of the PMOS transistor 561, and a drain connected to its own gate (gate of the PMOS transistor 562). The current flowing through the drain of the PMOS transistor 561 is set to be equal to the current flowing through the drain of the PMOS transistor 562. The description of the current mirror circuit 57 can be obtained by substituting the PMOS transistors 561 and 562 with the PMOS transistors 571 and 572, respectively, in the description of the current mirror circuit 56.

The drain of the PMOS transistor 561 is connected to the node P3 corresponding to an output end of a low voltage detection circuit 51C, and to the drain of the NMOS transistor 512. Meanwhile, the NMOS transistor 514 and the NMOS transistor 513 in the overvoltage protection circuit 80A are connected between the drain of the PMOS transistor 562 and the power supply terminal 9. Specifically, the source of the NMOS transistor 514 and the drain of the NMOS transistor 513 are connected to each other. The gate of the NMOS transistor 514 and the gate and the source of the NMOS transistor 513 are connected to the back gate of the NMOS transistor 530. The connection point of the gate of the NMOS transistor 514, the gate and the source of the NMOS transistor 513, and the back gate of the NMOS transistor 530 is connected to the power supply terminal 9.

The drain of the PMOS transistor 571 is connected to the node P4 corresponding to an output end of a high voltage detection circuit 52C, and to the drain of the NMOS transistor 522. Meanwhile, the NMOS transistor 524 and the NMOS transistor 523 in the overvoltage protection circuit 80A are connected between the drain of the PMOS transistor 572 and the power supply terminal 9. Specifically, the source of the NMOS transistor 524 and the drain of the NMOS transistor 523 are connected to each other. The gate of the NMOS transistor 524 and the gate and the source of the NMOS transistor 523 are connected to the back gate of the NMOS transistor 530. The connection point of the gate of the NMOS transistor 524, the gate and the source of the NMOS transistor 523, and the back gate of the NMOS transistor 530 is connected to the power supply terminal 9.

The overvoltage protection circuit 80C formed in this manner operates in the same manner as in the overvoltage protection circuits 80A and 80B and can yield the same effects. That is, the voltage detection circuit 50C and the comparator 60 in which the overvoltage protection circuit 80A is replaced with the overvoltage protection circuit 80C operate in the same manner as in the voltage detection circuit 50A and the comparator 60 that include the overvoltage protection circuit 80A, and can yield the same effects.

### (Fifth Configuration Example)

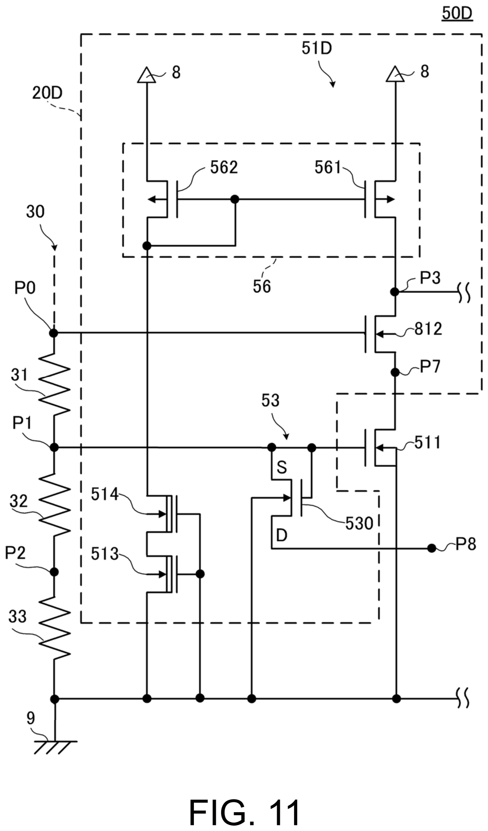

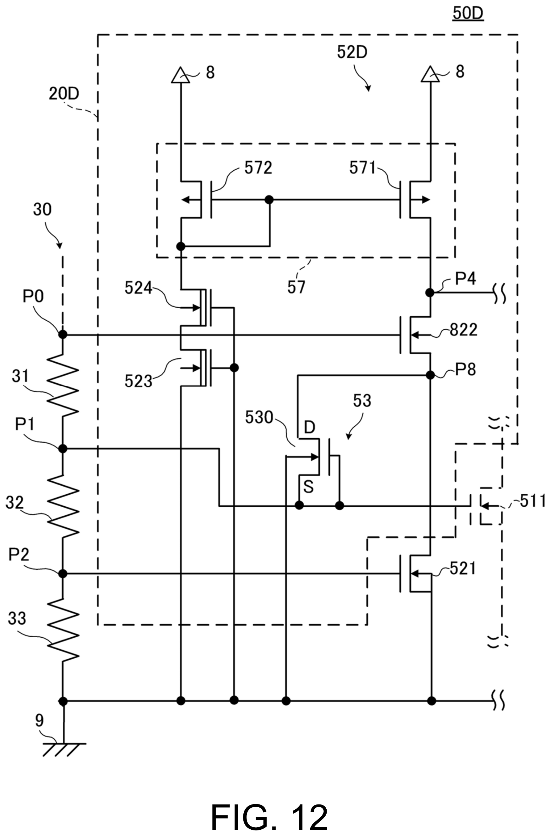

FIG. 11 and FIG. 12 are circuit diagrams for schematically illustrating a configuration example of a voltage detection circuit 50D including an overvoltage protection circuit 80D serving as the overvoltage protection circuit according to the at least one embodiment.

The overvoltage protection circuit 80D differs from the overvoltage protection circuit 80C in including enhancement type NMOS transistors 812 and 822 instead of the depletion type NMOS transistors 512 and 522, but there is no substantial difference in other points. In other words, the overvoltage protection circuit 80D is a circuit to which the modifications from the first configuration example to the third configuration example are applied to the overvoltage protection circuit 80C.

The overvoltage protection circuit 80D formed in this manner operates in the same manner as in the overvoltage protection circuits 80A, 80B, and 80C and can yield the same effects. In short, the voltage detection circuit 50D and the comparator 60 in which the overvoltage protection circuit 80A is replaced with the overvoltage protection circuit 80D operate in the same manner as in the voltage detection circuit 50A and the comparator 60 that include the overvoltage protection circuit 80A, and can yield the same effects.

Next, a charge control circuit serving as the charge/discharge control circuit according to the at least one embodiment and a charge control device and a battery device that serve as the semiconductor device according to the at least one embodiment are described.

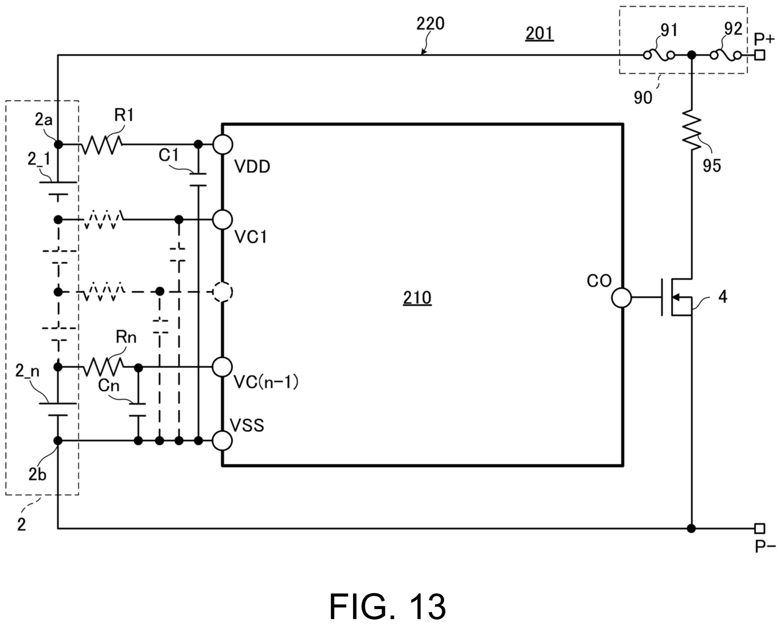

FIG. 13 is a schematic diagram for illustrating a configuration example of a charge control circuit 210 which is one configuration example of the charge/discharge control circuit according to the at least one embodiment, and a charge control device 220 and a battery device 201 which are each one configuration example of the semiconductor device according to the at least one embodiment.

The charge control device 220 is a so-called fuse-protection-type charge control device, and includes an open circuit 90 including a fuse 91 and a fuse 92, and the charge control circuit 210. The fuse 91 and the fuse 92 are connected in series to each other. Specifically, one end of the fuse 92 is connected to an EB+ terminal. Another end of the fuse 92 is connected to one end of the fuse 91. Another end of the fuse 91 is connected to the positive electrode of the first cell 2_1. The charge control circuit 210 is a circuit in which the discharge control signal output terminal DO and a signal path connected to the discharge control signal output terminal DO are omitted from the charge/discharge control circuit 10 (see FIG. 2), and there is no substantial difference in other parts of the circuit.

The charge control FET 4 is, for example, an N-channel field effect transistor including a gate, a source, and a drain. The gate is connected to the CO terminal of the charge control circuit 210. The source is connected to an EB- terminal. The drain is connected to one end of a resistor 95. The charge control FET 4 controls ON/OFF between the source terminal and the drain terminal based on a signal provided from the CO terminal. Another end of the resistor 95 is connected to a connection part of the fuse 91 and the fuse 92. The resistor 95 functions as a heater element for fusing the fuse 91 and the fuse 92 at the time of ON of the charge control FET 4.

A semiconductor device having a configuration different from that of the charge/discharge control device 20 and the battery device 1 may be adopted as the semiconductor device according to the at least one embodiment, such as the above-mentioned charge control device 220 and battery device 201. The charge control circuit 210, the charge control device 220, and the battery device 201 can yield the same effects as those of the charge/discharge control circuit 10, the charge/discharge control device 20, and the battery device 1.

The present invention is not limited to the above-mentioned at least one embodiment as it is, and various forms in addition to the above-mentioned examples are possible in the implementation stage, and various omissions, additions, replacements, or modifications can be made without departing from the gist of the invention. For example, the above-mentioned MOS transistor is shown as one example of an FET, but any type of FET is applicable. For example, a type of FET different from a MOSFET may be applied, such as a junction field effect transistor (JFET) or a metal-insulator-semiconductor field effect transistor (MISFET).

Further, the overvoltage protection circuit according to the at least one embodiment may have a different configuration between the low voltage detection circuit and the high voltage detection circuit. For example, in the voltage detection circuit 50, any one of the low voltage detection circuits 51A to 51D may be included instead of the low voltage detection circuit 51, or any one of the high voltage detection circuits 52A to 52D may be included instead of the high voltage detection circuit 52. The configuration of the overvoltage protection circuit according to the at least one embodiment can also be modified in accordance with the configurations of the low voltage detection circuit and the high voltage detection circuit.

In the overvoltage protection circuit according to the at least one embodiment, a depletion type FET for protecting the input transistor and functioning as a constant current source in the voltage detection circuit corresponding to the above-mentioned comparison target may be applied as an overvoltage protection element for protecting the input transistor of the low voltage detection circuit or the high voltage detection circuit.

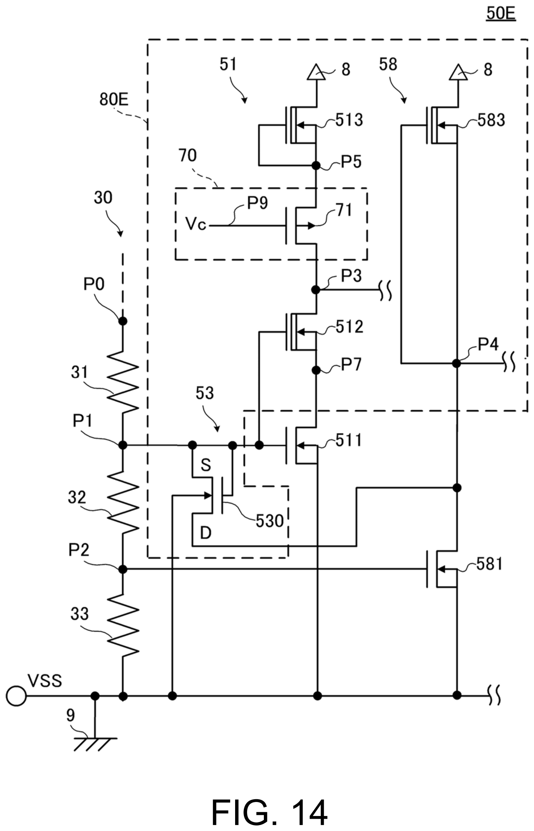

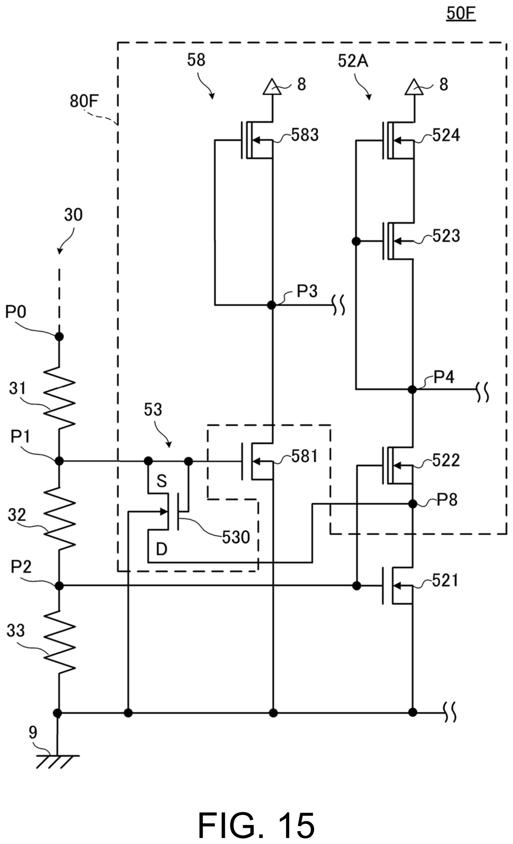

FIG. 14 and FIG. 15 are circuit diagrams for schematically illustrating a first modification example and a second modification example, respectively, among modification examples of the overvoltage protection circuit according to the at least one embodiment.

A voltage detection circuit 50E includes an overvoltage protection circuit 80E which is the first modification example of the overvoltage protection circuit according to the at least one embodiment. The voltage detection circuit 50E includes a voltage detection circuit 58 corresponding to the above-mentioned comparison target, instead of the high voltage detection circuit 52 relative to the voltage detection circuit 50. The voltage detection circuit 58 includes a depletion type NMOS transistor 583 functioning as a constant current source, and an enhancement type NMOS transistor 581 functioning as an input transistor.

In the voltage detection circuit 50E, a connection point of a gate and a source of the NMOS transistor 583 and a connection point of the drain of the NMOS transistor 530 and a drain of the NMOS transistor 581 form the same node as the node P4 that is a connection point with the level shift circuit 42 (see FIG. 3 and FIG. 5).

A voltage detection circuit 50F includes an overvoltage protection circuit 80F which is the second modification example of the overvoltage protection circuit according to the at least one embodiment. The voltage detection circuit 50F includes the voltage detection circuit 58 instead of the low voltage detection circuit 51A relative to the voltage detection circuit 50A. In the voltage detection circuit 50F, a connection point of the gate and the source of the NMOS transistor 583 and a connection point of the drain of the NMOS transistor 581 form the same node as the node P3 that is a connection point with the level shift circuit 41 (see FIG. 3 and FIG. 5).

The overvoltage protection circuit according to the modification examples of the at least one embodiment, such as the overvoltage protection circuits 80E and 80F, allows the ladder circuit for low voltage detection and the ladder circuit for high voltage detection to be shared, while suppressing the area to at least the same level as or smaller than before, as compared to the overvoltage protection circuit applied to a related-art voltage detection circuit, such as an overvoltage protection circuit applied to a voltage detection circuit including the ladder circuit for low voltage detection and the ladder circuit for high voltage detection or a voltage detection circuit in which the voltage detection circuit 58 corresponding to the comparison target is applied to both of the low voltage detection circuit and the high voltage detection circuit.

In the above-mentioned comparison target, the withstand voltage of the gate of the input transistor is determined in consideration of the voltages of the nodes P1 and P2 (voltage divided by the resistors 31, 32, and 33 in FIG. 14 and FIG. 15) in a case in which the input terminal (corresponding to the node P0 in FIG. 14 and FIG. 15) is short to the power supply, but this is not applied to the NMOS transistor 581 in the voltage detection circuits 50E and 50F.

The overvoltage protection circuit according to the modification examples of the at least one embodiment, such as the voltage detection circuits 50E and 50F, can reduce the withstand voltage of the NMOS transistor 581 as compared to the withstand voltage of the input transistor of an overvoltage protection circuit not including a bypass transistor, because the voltage of the node P1 is clamped to the vicinity of the reference voltage Vref by the bypass transistor. That is, the withstand voltage of the NMOS transistor 581 may be approximately the same as that of the NMOS transistors 511 and 521. In this case, the area of the NMOS transistor 581 can be made smaller than the area of the input transistor in the above-mentioned comparison target.

Further, the comparator according to the at least one embodiment may omit the level shifter 40 in a case in which no inconvenience occurs even without level shifting of the output voltage, for example, in a case in which the swing width of the output voltage of the voltage detection circuits 50 and 50A to 50F is sufficient. That is, the comparator 60 may be formed by omitting the level shifter 40 connected to the downstream stage of the voltage detection circuits 50 and 50A to 50F.

In the comparator according to the at least one embodiment, the two voltage detection circuits in the voltage detection circuits 50 and 50A to 50F, that is, the two voltage detection circuits selected from the low voltage detection circuit 51, the high voltage detection circuit 52, and the voltage detection circuit 58 are examples in which respective input ends thereof are the node P1 and the node P2 which are nodes different from the node P0, but the present invention is not limited thereto. In the comparator according to the at least one embodiment, the first input end and the second input end of the two voltage detection circuits in the voltage detection circuits 50 and 50A to 50F may be the same node as long as one of the two voltage detection circuits operates as a low voltage detection circuit and another of the two voltage detection circuits operates as a high voltage detection circuit. That is, the above-mentioned proportional constant "k" may include the case of k=1 (0<k≤1).

In the voltage detection circuits 50 and 50A to 50D, the gate of the NMOS transistor 511 and the gate of the NMOS transistor 521 may be connected to the node P1, or may be connected to the node P2. In the voltage detection circuit 50E, the gate of the NMOS transistor 511 and the gate of the NMOS transistor 581 may be connected to the node P1, or may be connected to the node P2. In the voltage detection circuit 50F, the gate of the NMOS transistor 521 and the gate of the NMOS transistor 581 may be connected to the node P1, or may be connected to the node P2.

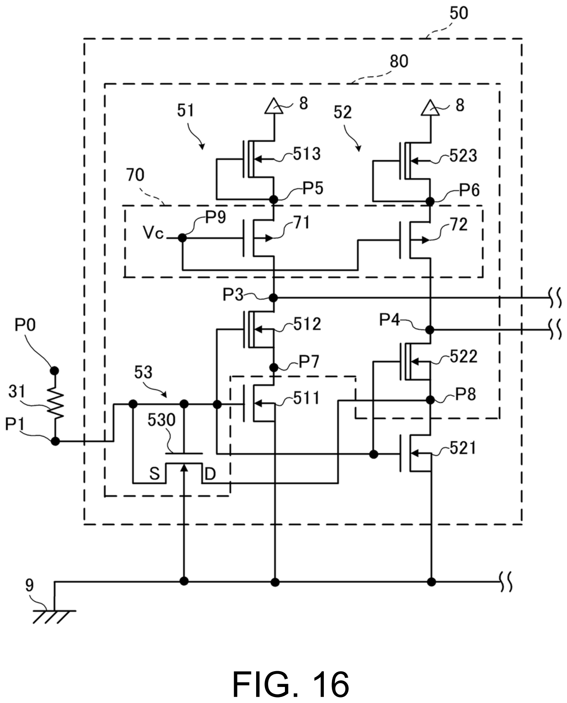

The voltage detection circuits 50 and 50A to 50F are also applicable to a semiconductor device in which the path 30 is not provided. As illustrated in FIG. 16, a configuration in which the node P0 to which the voltage is supplied and the node P1 connected to the gates of the NMOS transistors 511 and 512 are separated as different nodes through the resistor 31 may be applied. The gates of the NMOS transistors 511 and 512 illustrated as an example in FIG. 16 are formed at a common (the same) node, but the gates of the NMOS transistors 511 and 512 may be formed at different nodes, that is, two nodes formed of the node P1 and the node P2, by further connecting the resistor 32 to the node P1 which is one end of the resistor 31 illustrated as an example in FIG. 16, as in the voltage detection circuits 50 and 50A to 50F illustrated as an example in FIG. 4, FIG. 7 to FIG. 12, FIG. 14, and FIG. 15.

## Claims

1. An overvoltage protection circuit (80, 80A, 80B, 80C, 80D, 80E, 80F) to be connected to a protected circuit (50, 50A, 50B, 50C, 50D, 50E, 50F, 58) to protect the protected circuit (50, 50A, 50B, 50C, 50D, 50E, 50F, 58) from overvoltage, the protected circuit (50, 50A, 50B, 50C, 50D, 50E, 50F, 58) including:
a first input transistor (511, 581) including a gate to which a first input voltage is to be applied and a source connected to a first power supply terminal (9); and
a second input transistor (521, 581) including a gate to which a second input voltage proportional to the first input voltage is to be applied and a source connected to the first power supply terminal (9), the second input transistor (521, 581) being configured to transition from an OFF state to an ON state after the first input transistor (511, 581) in an OFF state transitions to an ON state in a process in which the first input voltage rises, the overvoltage protection circuit (80, 80A, 80B, 80C, 80D, 80E, 80F) comprising:
a first transistor (512, 522) including one end connected to a drain of any one input transistor out of the first input transistor (511, 581) and the second input transistor (521, 581);
a second transistor (513, 523) including a drain, a gate, and a source connected to the own gate of the second transistor (513, 523), the second transistor (513, 523) being configured to supply a constant current to the first transistor (512, 522) and the one input transistor;
a third transistor (71, 514, 524) connected in cascade to the second transistor (513, 523);
a fourth transistor (523, 583) including a drain, a gate, and a source connected to the own gate of the fourth transistor (523, 583), the fourth transistor (523, 583) being configured to supply a constant current to another input transistor out of the first input transistor (511, 581) and the second input transistor (521, 581); and
a switch (53) configured to establish conduction between the gate of the first input transistor (511, 581) and a drain of the second input transistor (521, 581) when a voltage exceeding a threshold voltage of the second input transistor (521, 581) is applied to the gate of each of the first input transistor (511, 581) and the second input transistor (521, 581).

2. The overvoltage protection circuit (80, 80A, 80B, 80C, 80D, 80E, 80F) according to claim 1, wherein the third transistor (71, 514, 524) is any one of a depletion type transistor or an enhancement type transistor, the depletion type transistor including a drain, a gate connected to the gate and the source of the second transistor (513, 523), and a source connected to the drain of the second transistor (513, 523), the constant current flowing between the drain and the source of the depletion type transistor, the enhancement type transistor including a source connected to the gate and the source of the second transistor (513, 523), a drain connected to another end of the first transistor (512, 522), and a gate.

3. The overvoltage protection circuit (80, 80A, 80B, 80C, 80D, 80E, 80F) according to claim 1 or 2, wherein the switch (53) is a bypass transistor including a gate connected to the gate of the first input transistor (511, 581), an own source, a drain connected to the drain of the second input transistor (521, 581), and a back gate connected to the first power supply terminal (9), the bypass transistor being configured to transition from an OFF state to an ON state when a voltage exceeding the threshold voltage of the second input transistor (521, 581) is applied to the gate of each of the first input transistor (511, 581) and the second input transistor (521, 581).

4. The overvoltage protection circuit (80, 80A, 80B, 80C, 80D, 80E, 80F) according to any one of claims 1 to 3,
wherein the gate of the first input transistor (511, 581) and the gate of the second input transistor (521, 581) are the same node, and
wherein the second input transistor (521, 581) has a threshold voltage higher than a threshold voltage of the first input transistor (511, 581).

5. The overvoltage protection circuit (80, 80A, 80B, 80C, 80D, 80E, 80F) according to any one of claims 1 to 3,
wherein the gate of the first input transistor (511) and the gate of the second input transistor (521, 581) are different nodes, and
wherein the second input voltage is lower than the first input voltage.

6. The overvoltage protection circuit (80, 80A, 80B, 80C, 80D, 80E, 80F) according to any one of claims 1 to 5, further comprising:
a fifth transistor (522) including one end connected to a drain of another one input transistor out of the first input transistor (511, 581) and the second input transistor (521, 581); and
a sixth transistor (72, 524) connected in cascade to the fourth transistor (523, 583).

7. A voltage detection circuit (51, 52), comprising:
the overvoltage protection circuit (80, 80A, 80B, 80C, 80D, 80E, 80F) of any one of claims 1 to 6;
the first input transistor (511, 581); and
the second input transistor (521, 581).

8. A comparator (60), comprising:
the overvoltage protection circuit (80, 80A, 80B, 80C, 80D, 80E, 80F) of any one of claims 1 to 5;
the first input transistor (511, 581); and
the second input transistor (521, 581),
wherein the first transistor (512, 522), the second transistor (513, 523), the third transistor (71, 514, 524), and the one input transistor form a first comparison circuit (61) configured to supply a first comparison result signal to another end of the first transistor (512, 522), the first comparison result signal including a signal level corresponding to whether a voltage applied to the gate of the one input transistor is higher than a threshold voltage of the one input transistor, and
wherein the fourth transistor (523, 583) and the another input transistor form a second comparison circuit (62) configured to supply a second comparison result signal to the drain of the another input transistor, the second comparison result signal including a signal level corresponding to whether a voltage applied to the gate of the another input transistor is higher than a threshold voltage of the another input transistor.

9. A comparator (60), comprising:
the overvoltage protection circuit (80, 80A, 80B, 80C, 80D, 80E, 80F) of claim 6;
the first input transistor (511, 581); and
the second input transistor (521, 581),
wherein the first transistor (512, 522), the second transistor (513, 523), the third transistor (71, 514, 524), and the one input transistor form a first comparison circuit (61) configured to supply a first comparison result signal to another end of the first transistor (512, 522), the first comparison result signal including a signal level corresponding to whether a voltage applied to the gate of the one input transistor is higher than a threshold voltage of the one input transistor, and
wherein the fourth transistor (523, 583), the fifth transistor (522), and the sixth transistor (524), and the another input transistor form a second comparison circuit (62) configured to supply a second comparison result signal to another end of the fifth transistor (522), the second comparison result signal including a signal level corresponding to whether a voltage applied to the gate of the another input transistor is higher than a threshold voltage of the another input transistor.

10. The comparator (60) according to claim 8 or 9, wherein the third transistor (71, 514, 524) is any one of a depletion type transistor or an enhancement type transistor, the depletion type transistor including a drain, a gate connected to the gate and the source of the second transistor (513, 523), and a source connected to the drain of the second transistor (513, 523), the constant current flowing between the own drain and the own source of the depletion type transistor, the enhancement type transistor including a source connected to the gate and the source of the second transistor (513, 523), a drain connected to the another end of the first transistor (512, 522), and a gate.

11. A charge/discharge control circuit (10), comprising:
the voltage detection circuit (51, 52) of claim 7;
a first power supply input terminal (VDD) and a second power supply input terminal (VSS);
a charge control signal output terminal (CO) connected to a gate of a charge control FET (4) configured to control charging of a secondary battery (2) including an assembled battery in which a plurality of battery cells (2_1 to 2_n) are connected in series;
a voltage determination circuit (12) configured to determine whether a voltage of the secondary battery (2) is lower than an over-discharge voltage and whether the voltage is higher than an over-charge voltage, based on a voltage supplied from the voltage detection circuit (51, 52); and
a control circuit configured to supply a control signal for switching the charge control FET (4) between an ON state and an OFF state to the charge control signal output terminal (CO) in accordance with a signal supplied from another circuit including the voltage determination circuit (12).

12. The charge/discharge control circuit (10) according to claim 11, further comprising:
a discharge control signal output terminal (DO) connected to a gate of a discharge control FET (4) configured to control discharging of the secondary battery (2); and
an external negative voltage input terminal (VM) to which a voltage of an external negative electrode terminal (P-) is applied, the external negative electrode terminal (P-) and an external positive electrode terminal (P+) being terminals to which any one of a charger configured to charge the secondary battery (2) or a load configured to discharge the secondary battery (2) is to be connected,
wherein the control circuit is configured to supply the control signal for switching the charge control FET (4) between the ON state and the OFF state to the charge control signal output terminal (CO), and is also configured to supply a control signal for switching the discharge control FET (4) between an ON state and an OFF state to the discharge control signal output terminal (DO), in accordance with the signal supplied from the another circuit including the voltage determination circuit (12).

13. A semiconductor device (201, 220), comprising:
the charge/discharge control circuit (10) of claim 11;
the charge control FET (4) including a gate connected to the charge control signal output terminal (CO); and
an open circuit (90) including a fuse connected to the charge control FET (4).

14. A semiconductor device (201, 220), comprising:
the charge/discharge control circuit (10) of claim 12;
the external positive electrode terminal (P+) and the external negative electrode terminal (P-);
the discharge control FET (4) including a drain and a source connected in series to a path connecting the external positive electrode terminal (P+) and the external negative electrode terminal (P-) to each other, and a gate connected to the discharge control signal output terminal (DO); and
the charge control FET (4) including a drain and a source connected in series to the path connecting the external positive electrode terminal (P+) and the external negative electrode terminal (P-) to each other, and a gate connected to the charge control signal output terminal (CO).

15. The semiconductor device (201, 220) according to claim 13 or 14, further comprising the secondary battery (2).
